# EUROPEAN PATENT SPECIFICATION

(11) **EP 3 921 376 B1**
(45) Date of publication and mention of the grant of the patent: **02.12.2026**
(21) Application number: 20710652.7
(22) Date of filing: 07.02.2020
(51) Int. Cl.: C09D 5/20

(54) **PEELABLE SWATCHES**
ABZIEHBARE FARBMUSTER
ÉCHANTILLONS DÉTACHABLES

(30) Priority: 08.02.2019 US 201962802897 P
(43) Date of publication of application: 15.12.2021
(73) Proprietor: PPG Industries Ohio, Inc., Cleveland, OH 44111 (US)
(72) Inventor: PHELPS, Alicia Marie, Gibsonia, Pennsylvania 15044 (US); GONZALEZ, Inanlley Yuderka, Pittsburgh, Pennsylvania 15212 (US); PAGNOTTI, Vincent Salvatore Jr., Wexford, Pennsylvania 15090 (US); PATEL, Pansy Dhilon, Murrysville, Pennsylvania 15668 (US); REARICK, Brian Kirk, Allison Park, Pennsylvania 15101 (US); NOVITSKY, Theodore Frank Jr., Butler, Pennsylvania 16002 (US); LUKUS, Peter Alan, Sarver, Pennsylvania 16055 (US)
(74) Representative: f & e patent
(86) International application number: PCT/US2020/017164
(87) International publication number: WO 2020/163684

(56) References cited:
- WO-A1-2018/067859
- WO-A1-2018/067859

## Description

### FIELD OF THE INVENTION

The present invention relates to compositions for and methods of visualizing the appearance of a color on a substrate.

### BACKGROUND OF THE INVENTION

Paint color swatches are commonly provided on a paper strip for use to select a desired color of a paint, such as an architectural paint. The small scale of such color swatches makes it difficult to visualize the use of the paint on a large area. As an alternative, an area of the substrate (e.g. a wall) may be painted with a sample of the paint. However, if that paint sample is not acceptable, the substrate bears an undesirable painted portion that must be repainted. WO 2018/067859 A1 discloses an aqueous coating composition comprising polyvinylbutyral and titanium dioxide pigment.

### SUMMARY OF THE INVENTION

The present invention comprises a method of visualizing the appearance of a color on a substrate comprising: applying a coating composition having that color to the substrate; drying and/or curing the coating composition to produce a dried and/or cured coating; evaluating the color appearance of the coating; and removing the coating from the substrate without the use of external releasing components. Also included in the present invention is a method of selecting a colored coating composition comprising visualizing the appearance of a color on a substrate in which the coating composition is a test coating composition comprising a test base resin and producing a final coating composition that color matches the test coating composition. The present invention also includes a peelable coating composition comprising comprising an aqueous dispersion of a resinous binder comprising polyvinyl butyral, wherein the polyvinyl butyral is present in an amount of over 50 wt. %, based on total solids. The method is defined in the appended claims.

### DESCRIPTION OF THE INVENTION

The invention is defined in the appended claims. Disclosed embodiments not falling under the claims are considered to be only illustrative. For purposes of the following detailed description, it is to be understood that the invention may assume various alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances. Further, in this application, the use of "a" or "an" means "at least one" unless specifically stated otherwise. For example, "a" polymer, "a" colorant, and the like refer to one or more of any of these items.

As used herein, "peelable", "peelable coating composition" "peelable coating" and like terms, means that the coating composition, upon drying and/or curing, can be peeled from the substrate; that is, the dried/cured coating is removable from the substrate by hand without the need for external releasing components such as tools (no scraper or the like) or chemicals (no paint stripper or the like) with minimal or no alteration of or damage to the underlying substrate. The coating may peel off in one sheet for ease of removal. Upon removing the coating, the substrate retains substantially no remnants of the coating, i.e. the substrate appears to be in its original state to the eye and/or to the touch.

As used herein, "external releasing components" refers to mechanical tools, such as a scraper or the like, and chemicals, such as paint stripper or the like, that can be used to remove a coating from a substrate. The term "drying" refers to the removal of water and/or other solvents. It is appreciated that drying the coating composition can also cause at least partial curing of a resinous material. Further, the terms "curable", "cure", and the like, mean that at least a portion of the components that make up the composition are polymerizable and/or crosslinkable including self-crosslinkable polymers. The curable coating composition of the present invention can be dried and/or cured, for example, at ambient conditions or with heat. As used herein, "ambient conditions" refers to the conditions of the surrounding environment (e.g., the temperature, humidity, and pressure of the room or outdoor environment in which the substrate is located).

Suitable substrates include porous substrates such as drywall, concrete, wood, paper (e.g. wallpaper), porcelain and ceramic and nonporous substrates such as metal, plastic, precoated porous substrates (e.g. drywall coated with a primer paint and/or a decorative paint), glass, polymeric materials, composites of any of the previous materials, and combinations thereof. A particularly suitable substrate according to the present invention is a wall or surface on the interior or exterior of a house, commercial building or other structure, that is already painted.

The present invention is described herein in connection with visualizing the appearance of a color by applying a coating composition (paint) having that color (or that dries to that color) on an architectural structure (a wall), but this is not meant to be limited as the present invention may also be used with other coating compositions on vehicles, appliances, or other substrates that can bear a coating composition. The peelable coating composition may be applied to a substrate temporarily to visualize how the substrate coated with a coating composition having that color will appear. The peelable coating composition may be applied to the substrate so the dried and/or cured coating produced from the composition is sufficiently large to provide a visual impression of the coating, such as in a two feet by three feet rectangle or any other desirable size or shape.

The peelable coating composition can include a colorant carrier, a resinous binder, and/or a plasticizer, and optionally other additives. By "colorant" it is meant to include pigments (organic or inorganic) that impart color, a hiding pigment (e.g. TiO₂), and/or color effect materials (e.g. metal flakes) as well as any other components that are typically provided in architectural paints or other such colored coating compositions. The carrier may be aqueous (e.g. water) and/or may contain an organic solvent.

A suitable resinous binder may include an acrylic latex, such as is produced from ethylenically unsaturated components that are dispersible, soluble, emulsifiable, or otherwise suspendable in water, thereby allowing the acrylic latex to form a mixture in the aqueous carrier. The ethylenically-unsaturated components may include a compound (e.g., monomer, polymers, and combinations thereof) having one or more (meth)acrylate functionalities. The term "polymer" refers to oligomers and homopolymers (e.g., prepared from a single monomer species), copolymers (e.g., prepared from at least two different monomer species), terpolymers (e.g., prepared from at least three different monomer species) and graft polymers. The term "(meth)acrylate", as used herein, refers to an acrylate and a methacrylate functionality.

Examples of suitable compounds having one or more (meth)acrylate functionalities for use in the peelable coating composition include methyl (meth)acrylates, ethyl(meth)acrylates, propyl (meth)acrylates, butyl (meth)acrylates, 2-ethylexyl (meth)acrylates, hydroxyethyl (meth)acrylates, hydroxybutyl (meth)acrylates, cyclohexyl (meth)acrylates, acrylic acids, methacrylic acids, and combinations thereof.

Another suitable resinous binder includes polyvinyl butyral, referred to herein as PVB or PVB resin, such as a plasticized polyvinyl butyral dispersed in water. The polyvinyl butyral can be plasticized by mixing polyvinyl butyral with a plasticizer including, but not limited to, castor oil. The plasticized polyvinyl butyral can be dispersed in water with the aid of a dispersing agent.

Other additives that may be included in the peelable coating composition of the present invention include, but are not limited to, defoaming agents, biocides, rheology modifiers, and/or surfactants.

Suitable formulations for use in the peelable coating composition include: the temporary vehicle protective coating compositions disclosed in U.S. Patent No. 2,680,724 at column 2 line 10 to column 4 line 35, which is incorporated herein by reference and spray booth coating compositions used to temporarily mask a surface inside a spray booth during spraying of another coating composition onto a component such as a vehicle. These conventional peelable protective coating compositions and masking coating compositions typically contain 30-50 weight percent (wt. %) PVB resin based on total solids. In addition, the conventional peelable protective coatings and masking coatings contain low pigment to binder weight ratios (P:B), such as less than 0.25, for example 0.1, typically with hiding pigment (e.g. titanium dioxide) or the like.

It has been found in the present invention that the concentration of PVB resin of over 50 wt. % based on total solids is desired for peelability of the coating composition comprising PVB resin from various substrates. Concentration of PVB resin in the peelable coating composition of the present invention may be at least 53 wt. % or at least 60 wt. % or at least 65 wt. % or at least 70 wt. % or at least 75 wt. % or at least 80 wt. %. The peelable coating composition of the present invention is desirably pigmented to mimic the appearance of a colored coating composition such as architectural paint at P:B ratios of at least 0.25, such as at least 0.3 or at least 0.5 or at least 0.75 or at least 1.0 or at least 1.25. In order to produce a peelable coating composition having the feel and handling of traditional architectural paints, the peelable coating composition of the present invention includes rheology modifiers, gloss control agents, colorants, and other additives as are well known in the art. For instance, the peelable coating composition may be provided as a pastel base paint, a neutral base paint and a mid-tone base paint, as are known in the architectural paint industry.

The coating composition of the present invention may also be substantially free, essentially free, or completely free of polyurethane polymers. As used herein, the terms "substantially free of polyurethane polymers" means that the coating composition contains less than 1000 parts per million (ppm) of polyurethane polymers, "essentially free of polyurethane polymers" means that the coating composition contains less than 100 ppm of polyurethane polymers, and "completely free of polyurethane polymers" means that the coating composition contains less than 20 parts per billion (ppb) of polyurethane polymers. The amounts are based on total solids weight of the coating composition.

The peelable coating composition may be applied to the substrate by brush, roll, squeeze tube, crayon, marker, ink pen, foam, gel, paste, spraying, dipping, and as an aerosol. The coating composition can be applied to the substrate in a single application using any of the previously described methods and dried and/or cured to form a coating. Alternatively, multiple applications of the coating composition can be applied to the substrate using any of the previously described methods. When multiple applications of the composition are applied to the substrate, the coating composition can be dried after each application prior to a final drying and/or curing step, or the compositions can be applied as a wet-on-wet process followed by a final drying and/or curing step.

As previously described, the coatings formed from the peelable coating compositions are removable from the substrate without the need for external releasing components such as tools (no scraper or the like) or chemicals (no paint stripper or the like) with minimal or no alteration of or damage to the underlying substrate. The coatings formed from the peelable coating compositions of the present invention can therefore be used to visualize the appearance of a color on a substrate and then easily removed with the substrate retaining substantially no remnants of the coating, i.e. the substrate appears to be in its original state to the eye and/or to the touch.

The peelable coating composition of the present invention may also be used to test the appearance of a color on a substrate and determine if the color matches a desired color. The desired color may be any color, such as one selected from a traditional color swatch available from paint suppliers, a colored article, an on-line color swatch or any other source of a color for a coating composition. According to the method of the present invention, the peelable coating composition is applied as a test coating composition to a substrate and dried and/or cured to produce a test coating. The test coating composition is formulated so that the resulting test coating color matches the desired color. By "color match", it is meant that the test coating color is sufficiently similar to the desired color such that no difference there between is detectable by the eye. Alternatively, the color match may be confirmed via a spectrophotometer or colorimeter or other suitable device.

Typical color swatches produced by paint suppliers are flat (low or no gloss) since they are often printed with ink onto paper to mimic the color of the paint formulation when dried. A purchaser of paint may select a particular gloss level for the paint, such as eggshell, semi-gloss, gloss, etc. The peelable coating composition containing a formulation having the desired gloss level (e.g. semi-gloss) is formulated so that the dried test coating (with semi-gloss sheen) color matches the printed color swatch.

The method of the present invention may include the application of multiple peelable coating compositions each drying to a different color to test the appearance of multiple colors on a substrate. For example, the method of the present invention may include applying at least a first coating composition and a second coating composition that is different from the first coating composition to produce a first coating and a second coating. The colors provided by the first and second coatings are then compared to a desired color.

It will be appreciated that the test coating composition used to produce the test coating may not be desirable as the final coating composition applied to the substrate because the test coating is peelable. As such, the present invention also includes a method of selecting a colored coating composition comprising applying a test coating composition comprising a test base resin to the substrate as previously described, and then producing a final coating composition that color matches the test coating composition. The final coating composition comprises a final base resin that may be the same or different from the test base resin.

### EXAMPLES

The following examples are presented to demonstrate the general principles of the invention. The invention should not be considered as limited to the specific examples presented. All parts and percentages in the examples are by weight unless otherwise indicated.

### EXAMPLE 1-3: Peelable Coating Compositions

A peelable coating composition was prepared from the components listed in Table 1.

**Table 1**

| Component | Amount (grams) |
|---|---|
| BoothStrip^{™} (ZR5955)-White¹ | 979.53 |
| PPG Futurity^{™} C Zero VOC Colorant (yellow oxide)² | 8.97 |
| PPG Futurity^{™} D Zero VOC Colorant (phalo green)² | 6.71 |

| | |
|---|---|
| ¹A water-based peelable plastic film, available commercially from Matthews Paint, Delaware, OH. ²An architectural colorant system, available commercially from PPG Paints, Pittsburgh, PA. | |

The components listed in Table 1 were added to a quart sized paint can and mixed on a Red Devil 1400 single arm paint shaker until a constant color was reached (approximately three minutes).

### EXAMPLE 2

### Application of the Peelable Coating Compositions to a Substrate

The peelable composition of Example 1 was applied with a 2.5 inch angle sash brush over three panels (1A, 1B, and 1C) coated with an interior latex paints as shown in Table 2 having varying sheens of satin, flat and semi-gloss as are used in the architectural paint market.

**Table 2**

| Example | Sheen | Base | Dry Time |
|---|---|---|---|
| 1A | Satin | PPG MANOR HALL Interior (PPG1181-1 Candy Mix) ³ | Approx. 15 months |
| 1B | Flat | PITTSBURGH PAINTS PARAMOUNT Interior (37-2110-Pastel Base) ³ | 1 Day |
| 1C | Semi-Gloss | PPG MANOR HALL Interior (82-500 Bright Base) ³ | 1 Day |

| | | | |
|---|---|---|---|
| ³ Architectural paints formed from an acrylic latex, available commercially from PPG. | | | |

After the peelable coating compositions were dry to the touch (approximately 30 minutes), a second coat of the coating composition from Example 1 was applied. The second coats were then dried (approximately 4 hours), and peeled from each panel. The coatings were peeled as a single film piece by hand without the use of tools or chemicals.

### EXAMPLE 3

### Testing of the Peelable Coatings

Each of the panels coated with the peelable coating compositions of Example 1 were tested for color and gloss change of the underlying latex paint before and after the application of the peelable coating composition, using a Datacolor^{®} 850 spectrophotometer for color change (ΔE) and a BYK micro-Tri-gloss meter for gloss change. The color change ((ΔE) of the substrate was determined after peeling. A higher ΔE value indicates a larger visible difference between the color of the substrate before and after application and peeling. Significant gloss changes are those that can be perceived by the naked eye. A shift in gloss (positively or negatively) of greater than 3 units is considered significant. Additionally, while 20° and 85° gloss were recorded, 60° gloss is generally considered the angle at which a coated surface is viewed. The results are listed in Table 3, showing that the underlying interior latex of the panels all had minimal color and loss changes after removing the peelable coatings.

**Table 3**

| Example | Color Change (Δ E) | Gloss Change 20° | Gloss Change 60° | Gloss Change 85° |
|---|---|---|---|---|
| 1A | 0.64 | 0 | 0.2 | 1.9 |
| 1B | 1.16 | 0 | 0.4 | 0.1 |
| 1C | 0.72 | 0.1 | 0.8 | 1.7 |

### Examples 4-15: Peelable Coating Compositions

Formulations were made using commercial polyvinylbutyral (PVB) resins. In each of Examples 4-15, formulations were made by adding the components to a container in the order listed in respective Tables 4-15. For example, in Example 4, the order of addition was tap water, NATROSOL PLUS, disodium phosphate, etc. After the addition of MINEX (4 or 7) the formulations were each mixed with a high-shear Cowles blade for 15 minutes. The remaining ingredients were added and mixed with a low shear blade. After all components were added the formulations were then stirred for at least 30 minutes with a low shear blade.

**Table 4**

| Component | Amount (grams) |
|---|---|
| Tap water | 32.09 |
| NATROSOL PLUS⁴ 330 | 0.06 |
| Disodium phosphate, anhydrous | 0.96 |
| DOWSIL 8590⁵ | 0.96 |
| ACRYSOL DR-6600⁶ | 2.34 |
| 45% potassium hydroxide, aqueous | 2.16 |
| Tap water | 0.31 |
| ACTICIDE MBS⁷ | 1.25 |
| TAMOL⁸ 731A | 2.40 |
| Tap water | 0.31 |
| TERGITOL 15-S-9⁹ | 1.44 |
| TERGITOL 15-S-40¹⁰ (70%) | 1.44 |
| DIAFIL 540¹¹ | 7.27 |
| MINEX 4¹² | 3.12 |
| MINEX 4 | 20.78 |
| OPTIFILM ENHANCER 400¹³ | 6.71 |
| CAPSTONE FS-61¹⁴ | 0.48 |
| Tap water | 22.98 |
| TIONA 5961¹⁵ | 121.21 |
| Tap water | 0.33 |
| AQUAFLOW NHS-300¹⁶ | 0.38 |
| ACRYSOL RM-12W¹⁷ | 0.92 |
| DOWSIL 8590 | 0.77 |
| PVB resin¹⁸ | 311.36 |
| Tap water | 0.33 |
| ROPAQUE ULTRA¹⁹ | 30.49 |
| Tap water | 0.33 |
| ACRYSOL DR-6600 | 3.16 |
| POLYPHASE PW40²⁰ | 0.54 |
| DOWSIL 8590 | 1.15 |
| Tap water | 0.38 |

| | |
|---|---|
| ⁴ Hydroxyethyl cellulose, available from Ashland Specialty Ingredients, Ashland, OH ⁵ Rheology modifier available from Dow Chemical Company, Midland, MI ⁶ Rheology modifier available from Dow Chemical Company, Midland, MI ⁷ Biocide available from Thor Specialties, Shelton, CT ⁸ Dispersant available from Palmer Holland, North Olmstead, OH ⁹ Surfactant available from Dow Chemical Company, Midland, MI ¹⁰ Surfactant available from Dow Chemical Company, Midland, MI ¹¹ Diatomite available from Imerys, San Jose, CA ¹² Silicate available from Three Rivers Packaging Division of The Cary Company, McKees Rocks, PA ¹³ Coalescent available from Eastman Chemical Company, Kingston, TN ¹⁴ Fluorosurfactant available from Chemours Company, Wilmington, DE ¹⁵ Titanium dioxide slurry available from Tronox Chemicals Company, Stamford, CT ¹⁶ Rheology modifier available from Ashland Specialty Ingredients, Ashland, OH ¹⁷ Available from Dow Chemical Company, Midland, MI ¹⁸ Polyvinyl butyral composition, produced by PPG Industries, Brazil, IN ¹⁹ Hiding pigment available from Dow Chemical Company, Midland, MI ²⁰ Antifungal agent available from Troy Chemical Company, Newark, NJ | |

**Table 5**

| Component | Amount (grams) |
|---|---|
| Tap water | 35.54 |
| NATROSOL PLUS 330 | 0.13 |
| Disodium phosphate, anhydrous | 1.04 |
| DOWSIL 8590 | 1.02 |
| ACRYSOL DR-6600 | 2.54 |
| 45% potassium hydroxide, aqueous | 2.34 |
| ACTICIDE MBS | 1.35 |
| TAMOL 731A | 2.60 |
| TERGITOL 15-S-9 | 1.56 |
| TERGITOL 15-S-40 (70%) | 1.56 |
| DIAFIL 540 | 7.90 |
| MINEX 4 | 3.39 |
| MINEX 4 | 22.58 |
| OPTIFILM ENHANCER 400 | 7.29 |
| CAPSTONE FS-61 | 0.52 |
| Tap water | 26.84 |
| TIONA 596I slurry | 164.62 |
| AQUAFLOW NHS-300 | 1.04 |
| ACRYSOL RM-12W | 1.25 |
| DOWSIL 8590 | 0.51 |
| PVB SLIM5423 | 634.30 |
| ROPAQUE ULTA | 41.41 |
| ACRYSOL DR-6600 | 4.29 |
| POLYPHASE PW40 | 0.73 |
| DOWSIL 8590 | 0.51 |

**Table 6**

| Component | Amount (grams) |
|---|---|
| Tap water | 74.19 |
| NATROSOL PLUS 330 | 0.27 |
| Disodium phosphate, anhydrous | 2.17 |
| DOWSIL 8590 | 2.12 |
| ACRYSOL DR-6600 | 5.30 |
| 45% potassium hydroxide, aqueous | 4.89 |
| ACTICIDE MBS | 2.83 |
| TAMOL 731A | 5.44 |
| TERGITOL 15-S-9 | 3.26 |
| TERGITOL 15-S-40 (70%) | 3.26 |
| DIAFIL 540 | 16.50 |
| MINEX 4 | 7.07 |
| MINEX 4 | 47.13 |
| OPTIFILM enhancer 400 | 15.22 |
| CAPSTONE FS-61 | 1.09 |
| TIONA 596I | 85.91 |
| AQUAFLOW NHS-300 | 1.09 |
| ACRYSOL RM-12W | 1.31 |
| DOWSIL 8590 | 0.53 |
| PVB resin | 662.04 |
| ROPAQUE ULTRA | 43.22 |
| Tap water | 28.02 |
| ACRYSOL DR-6600 | 4.48 |
| POLYPHASE PW40 | 0.76 |
| DOWSIL 8590 | 0.53 |

**Table 7**

| Component | Amount (grams) |
|---|---|
| Tap water | 78.49 |
| TYLOSE HX 6000 YG4²¹ | 0.14 |
| Disodium phosphate, anhydrous | 1.13 |
| DOWSIL 8590 | 2.20 |
| ACRYSOL DR-6600 | 5.61 |
| 45% potassium hydroxide, aqueous | 2.83 |
| ACTICIDE MBS | 1.64 |
| TAMOL 731A | 6.79 |
| TERGITOL 15-S-40 (70%) | 1.70 |
| TERGITOL 15-S-9 | 1.70 |
| MINEX 4 | 45.27 |
| DIAFIL 540 | 16.85 |
| MINEX 3²² | 44.99 |
| TIONA 596 | 155.07 |
| OPTIFILM ENHANCER 400 | 8.49 |
| CAPSTONE FS-61 | 0.57 |
| ACRYSOL RM-12W | 4.01 |
| PVB resin | 679.04 |
| Tap water | 49.09 |
| DOWSIL 8590 | 1.10 |
| ACRYSOL DR-6600 | 8.54 |
| DOWSIL 8590 | 1.10 |
| ACTICIDE IPW 40²³ | 0.79 |

| | |
|---|---|
| ²¹Hydroxyethyl cellulose, available from SE Tylose, Wiesbaden, Germany ²²Available from Three Rivers Packaging Division of The Cary Company, McKees Rocks, PA ²³Biocide, available from Thor Specialties, Shelton, CT | |

**Table 8**

| Component | Amount (grams) |
|---|---|
| Tap water | 35.54 |
| NATROSOL PLUS 330 | 0.13 |
| Disodium phosphate, anhydrous | 1.04 |
| DOWSIL 8590 | 1.02 |
| ACRYSOL DR-6600 | 2.54 |
| 45% potassium hydroxide, aqueous | 2.34 |
| ACTICIDE MBS | 1.35 |
| TAMOL 731A | 2.60 |
| TERGITOL 15-S-9 | 1.56 |
| TERGITOL 15-S-40 (70%) | 1.56 |
| DIAFIL 540 | 7.90 |
| MINEX 4 | 3.39 |
| MINEX 4 | 22.58 |
| OPTIFILM ENHANCER 400 | 7.29 |
| CAPSTONE FS-61 | 0.52 |
| Tap water | 26.84 |
| TIONA 596I | 164.62 |
| AQUAFLOW NHS-300 | 1.04 |
| ACRYSOL RM-12W | 1.25 |
| DOWSIL 8590 | 0.51 |
| PVB resin | 634.30 |
| ROPAQUE ULTRA | 41.41 |
| ACRYSOL DR-6600 | 4.29 |
| POLYPHASE PW40 | 0.73 |
| DOWSIL 8590 | 0.51 |

**Table 9**

| Component | Amount (grams) |
|---|---|
| Tap water | 35.54 |
| NATROSOL PLUS 330 | 0.13 |
| Disodium phosphate, anhydrous | 1.04 |
| DOWSIL 8590 | 1.02 |
| ACRYSOL DR-6600 | 2.54 |
| 45% potassium hydroxide, aqueous | 2.34 |
| ACTICIDE MBS | 1.35 |
| TAMOL 731A 2300LB | 2.6 |
| TERGITOL 15-S-9 | 1.56 |
| TERGITOL 15-S-40 | 1.56 |
| DIAFIL 540 | 7.9 |
| MINEX 4 | 3.39 |
| MINEX 4 | 22.58 |
| OPTIFILM ENHANCER 400 | 7.29 |
| CAPSTONE FS-61 | 0.52 |
| Tap water | 26.84 |
| TIONA 596I | 54.3246 |
| AQUAFLOW NHS-300 | 1.04 |
| ACRYSOL RM-12W | 1.25 |
| DOWSIL 8590 | 0.51 |
| PVB resin | 634.3 |
| ROPAQUE ULTRA | 41.41 |
| ACRYSOL DR-6600 | 4.29 |
| POLYPHASE PW40 | 0.73 |
| DOWSIL 8590 | 0.51 |

**Table 10**

| Component | Amount (grams) |
|---|---|
| Tap water | 141.78 |
| PANGEL S²⁴ | 2.40 |
| TYLOSE HX 6000 YG4 | 2.92 |
| 45% potassium hydroxide, aqueous | 0.57 |
| DOWSIL 8590 | 2.20 |
| ACTICIDE MBS | 1.51 |
| TAMOL 731A | 1.80 |
| TERGITOL 15-S-9 | 1.80 |
| TERGITOL 15-S-40 | 1.20 |
| Zinc omadine | 1.80 |
| MINEX 7²⁵ | 56.68 |
| Calcium carbonate 0.2-10 micron | 38.99 |
| DOWSIL 8590 | 1.10 |
| OXI-CURE 2000²⁶ | 3.00 |
| Tap water | 80.50 |
| COAPUR 817W²⁷ | 1.45 |
| OPTIFLO L1400²⁸ | 12.00 |
| PVB resin | 629.87 |
| ROPAQUE ULTRA | 3.60 |
| Aluminum silicate slurry | 15.00 |
| DOWSII, 8590 | 1.10 |

| | |
|---|---|
| ²⁴ Rheology modifier, available from Tolsa USA, Inc., Casper, WI ²⁵ Available from Three Rivers Packaging Division of The Cary Company, McKees Rocks, PA ²⁶ Coalescent, available from Cargill, Inc., Minneapolis, MN ²⁷ Rheology modifier, available from Coatex Arkema Group, Chester, SC ²⁸ Rheology modifier, available from BYK Additives, Wesel, Germany | |

**Table 11**

| Component | Amount (grams) |
|---|---|
| NATROSOL PLUS 330 | 0.12 |
| Disodium phosphate, anhydrous | 0.96 |
| DOWSIL 8590 | 0.96 |
| ACRYSOL DR-6600 | 4.68 |
| 45% potassium hydroxide, aqueous | 2.16 |
| ACTICIDE MBS | 1.25 |
| TAMOL 731A | 2.40 |
| TERGITOL 15-S-9 | 1.44 |
| TERGITOL 15-S-40 | 1.44 |
| DIAFIL 540 | 7.27 |
| MINEX 4 | 23.90 |
| OPTIFILM 400 | 6.71 |
| CAPSTONE FS-61 | 0.48 |
| Tap water | 22.98 |
| TIONA 596I slurry | 121.21 |
| AQUAFLOW NHS-300 | 0.77 |
| ACRYSOL RM-12W | 1.84 |
| DOWSIL 8590 | 0.77 |
| AQUASPERSIONS PVB 519²⁹ | 311.36 |
| ROPAQUE ULTRA | 30.49 |
| Tap water | 0.33 |
| ACRYSOL DR-6600 | 6.32 |
| POLYPHASE PW40 | 0.54 |
| DOWSIL 8590 | 1.15 |
| ACRYSOL RM-12W | 8.00 |

| | |
|---|---|
| ²⁹ PVB resin, available from Halifax, United Kingdom | |

**Table 12**

| Component | Amount (grams) |
|---|---|
| NATROSOL PLUS 330 | 0.12 |
| Disodium phosphate, anhydrous | 0.96 |
| DOWSIL 8590 | 0.96 |
| ACRYSOL DR-6600 | 4.68 |
| 45% potassium hydroxide, aqueous | 2.16 |
| ACTICIDE MBS | 1.25 |
| TAMOL 731A | 2.4 |
| TERGITOL 15-S-9 | 1.44 |
| TERGITOL 15-S-40 | 1.44 |
| DIAFIL 540 | 7.27 |
| MINEX 4 | 23.9 |
| OPTIFILM ENHANCER 400 | 6.71 |
| CAPSTONE FS-61 | 0.48 |
| Tap water | 22.98 |
| TIONA 596I | 39.99 |
| AQUAFLOW NHS-300 | 0.77 |
| ACRYSOL RM-12W | 1.84 |
| DOWSIL 8590 | 0.77 |
| AQUASPERSIONS PVB 519 | 311.36 |
| ROPAQUE | 30.49 |
| Tap water | 0.33 |
| ACRYSOL DR-6600 | 6.32 |
| POLYPHASE PW40 | 0.54 |
| DOWSIL 8590 | 1.15 |
| ACRYSOL RM-12W | 8 |

**Table 13**

| Component | Amount (grams) |
|---|---|
| MINEX 4 | 25.27 |
| Tap water | 26.26 |
| TYLOSE HX 6000 YG4 | 0.13 |
| Disodium phosphate, anhydrous | 1.01 |
| Tap water | 1.01 |
| DREWPLUS T 4507³⁰ | 1.01 |
| Tap water | 2.02 |
| ACRYSOL DR-6600 | 5.00 |
| 45% potassium hydroxide, aqueous | 2.27 |
| ACTICIDE MBS | 1.31 |
| TAMOL 731A | 2.53 |
| Tap water | 2.58 |
| TERGITOL 15-S-9 | 1.52 |
| Tap water | 1.10 |
| TERGITOL 15-S-40 | 1.52 |
| DIAFIL 540 | 7.58 |
| Tap water | 2.02 |
| OPTIFILM 400 | 7.08 |
| CAPSTONE FS-61 | 0.51 |
| Tap water | 2.11 |
| AQUAFLOW NHS-300 | 1.01 |
| ACRYSOL RM-12W | 2.15 |
| Tap water | 20.67 |
| SHARKCOATTC 12-22³¹ | 861.75 |
| ROPAQUE | 40.33 |
| Tap water | 9.66 |
| DREWPLUS T 4507 | 1.52 |
| Tap water | 2.02 |
| TIONA 596I | 149.52 |
| DREWPLUS T 4507 | 1.01 |
| Tap water | 2.02 |
| ACRYSOL DR-6600 | 7.64 |
| ACTICIDE IPW 40 | 0.71 |

| | |
|---|---|
| ³⁰ Antifoam agent, available from Ashland LLC, Wilmington, DE ³¹ PVB, available from Shark Solutions, Roskilde, Denmark | |

**Table 14**

| Component | Amount (grams) |
|---|---|
| Tap water | 37.10 |
| TYLOSE HX 6000 YG4 | 0.13 |
| Disodium phosphate, anhydrous | 1.01 |
| DREWPLUS T 4507 | 1.01 |
| ACRYSOL DR-6600 | 5.00 |
| 45% potassium hydroxide, aqueous | 2.27 |
| ACTICIDE MBS | 1.31 |
| TAMOL 731A | 2.53 |
| TERGITOL 15-S-9 | 1.52 |
| TERGITOL 15-S-40 | 1.52 |
| DIAFIL 540 | 7.58 |
| MINEX 4 | 25.27 |
| OPTIFILM 400 | 7.08 |
| CAPSTONE FS-61 | 0.51 |
| AQUAFLOW NHS-300 | 1.01 |
| ACRYSOL RM-12W | 2.15 |
| Tap water | 34.37 |
| SHARKCOATTC12-22 | 861.75 |
| ROPAQUE ULTRA | 40.33 |
| DREWPLUS T 4507 | 1.52 |
| TIONA 596I | 49.3416 |
| DREWPLUS T 4507 | 1.01 |
| ACRYSOL DR-6600 | 7.64 |
| ACTICIDE IPW 40 | 0.71 |

**Table 15**

| Material | Amount (grams) |
|---|---|
| Tap water | 37.10 |
| TYLOSE HX 6000 YG4 | 0.13 |
| Disodium phosphate, anhydrous | 1.01 |
| DREWPLUS T 4507 | 1.01 |
| ACRYSOL DR-6600 | 5.00 |
| 45% potassium hydroxide, aqueous | 2.27 |
| ACTICIDE MBS | 1.31 |
| TAMOL 731A | 2.53 |
| TERGITOL 15-S-9 | 1.52 |
| TERGITOL 15-S-40 | 1.52 |
| DIAFIL 540 | 7.58 |
| MINEX 4 | 25.27 |
| OPTIFILM enhancer 400 | 7.08 |
| CAPSTONE FS-61 | 0.51 |
| AQUAFLOW NHS-300 | 1.01 |
| ACRYSOL RM-12W | 2.15 |
| Tap water | 34.37 |
| SHARKCOAT TC12-22 | 861.75 |
| ROPAQUE ULTRA | 40.33 |
| DREWPLUS T 4507 | 1.52 |
| TIONA 596I | 0.00 |
| DREWPLUS t 4507 | 1.01 |
| ACRYSOL DR-6600 | 7.64 |
| ACTICIDE IPW 40 | 0.71 |

Each of the formulations of Examples 4-15 were tinted to produce colored coating compositions at three tint levels of pastel, midtone, and neutral using PPG colorant 96-13000 Durable Red. Half pint samples of the formulations were tinted to achieve 4 oz. pastel (6.45g colorant added), 12 oz. midtone (20.69g colorant added) and 16 oz. neutral (28.57g colorant added). Examples 4, 5, 7, 8, 11, and 13 were tinted to produce pastel colored coating compositions. Examples 6, 9, 12, and 14 were tinted to produce midtone colored coating compositions. Examples 10 and 15 were tinted to produce neutral colored coating compositions.

Substrates were tested both before the peelable coating composition was applied, as well as after the peelable coating composition was removed to determine changes in gloss and color. The formulations of Examples 4-15 were applied to the substrate using a 6 mil drawdown bar (BYK-Gardner, Columbia, MD) and dried, resulting in thicknesses of 3-4 mils. The substrates included primed drywall (primer, flat pastel MANOR HALL, available from PPG Industries Ohio, Inc.), painted primed drywall (paint, Paramount Eggshell Pastel, available from PPG Industries Ohio, Inc.), alkyd paint (Devoe Devguard 4308 Alkyd Enamel, available from PPG Industries, Canada), and aluminum (A-36 panels from Q-Lab Corporation, Westlake, OH). Gloss and color change (ΔE) were measured as in Example 3.

The "peelability" of coatings produced from tinted formulations of Examples 4-15 was evaluated qualitatively on a 1-10 scale for each substrate, with the following scale:
1 - Complete failure where paint crumbled, cracked, or was completely stuck to panel
3 - Some of the paint peels off the panel easily, with 75% failure
5 - Half of the paint peels off the panel easily, with 50% failure
7 - Most of the paint peels off the panel easily, with 25% failure
10 - Complete success - all of the paint peels off panel easily without crumbling, cracking or sticking

All data is reported in Tables 16-19 for the various substrates.

**Table 16: Primed Drywall**

| | Gloss | | | | | | ΔE | Peelability |
|---|---|---|---|---|---|---|---|---|
| Tinted Coating | 20° | | 60° | | 85° | | | |
| | Pre | Post | Pre | Post | Pre | Post | | |
| Example 4 | 1.2 | 1.1 | 2.0 | 2.0 | 0.6 | 0.5 | 6.19 | 6 |
| Example 5 | 1.2 | 1.1 | 2.1 | 2.0 | 0.7 | 0.6 | 4.19 | 9 |
| Example 6 | 1.2 | 1.2 | 2.1 | 2.0 | 0.8 | 0.6 | 3.1 | 10 |
| Example 7 | 1.2 | 1.2 | 2.1 | 2.0 | 0.7 | 0.6 | 2.33 | 9 |
| Example 8 | 1.2 | 1.2 | 2.2 | 2.0 | 0.8 | 0.6 | 3.53 | 10 |
| Example 9 | 1.2 | 1.1 | 2.0 | 2.0 | 0.6 | 0.6 | 4.81 | 10 |
| Example 10 | 1.2 | 1.1 | 2.1 | 2.0 | 0.7 | 0.6 | 4.81 | 9 |
| Example 11 | 1.2 | 1.0 | 2.0 | 9.7 | 0.7 | 22.1 | 100.42 | 1 |
| Example 12 | 1.2 | 0.8 | 2.0 | 7.4 | 0.6 | 16.5 | 104.48 | 1 |
| Example 13 | 1.2 | 1.1 | 2.1 | 2.0 | 0.7 | 0.6 | 3.1 | 7 |
| Example 14 | 1.2 | 1.1 | 2.2 | 2.0 | 0.8 | 0.6 | 3.8 | 7 |
| Example 15 | 1.2 | 1.1 | 2.2 | 2.0 | 0.8 | 0.6 | 3.72 | 7 |

**Table 17: Primed and Painted Drywall**

| | Gloss | | | | | | ΔE | Peelability |
|---|---|---|---|---|---|---|---|---|
| Tinted Coating | 20° | | 60° | | 85° | | | |
| | Pre | Post | Pre | Post | Pre | Post | | |
| Example 4 | 1.7 | 1.5 | 6.5 | 5.6 | 8.8 | 8 | 6.87 | 7 |
| Example 5 | 1.7 | 1.5 | 6.2 | 5.7 | 8.4 | 8.1 | 7.48 | 10 |
| Example 6 | 1.6 | 1.5 | 5.8 | 5.5 | 7 | 7.5 | 4.99 | 10 |
| Example 7 | 1.6 | 1.5 | 6 | 5.5 | 7.1 | 7.3 | 5.64 | 10 |
| Example 8 | 1.6 | 1.5 | 5.7 | 5.4 | 6.9 | 6.5 | 7.78 | 10 |
| Example 9 | 1.6 | 1.5 | 5.9 | 5.7 | 7.3 | 7.5 | 11.87 | 10 |
| Example 10 | 1.6 | 1.5 | 5.8 | 5.8 | 6.9 | 7.5 | 14.54 | 10 |
| Example 11 | 1.6 | 1.0 | 6.1 | 10.1 | 7.3 | 24.7 | 98.79 | 1 |
| Example 12 | 1.6 | 0.8 | 5.7 | 7.7 | 7.1 | 16.7 | 103.34 | 1 |
| Example 13 | 1.7 | 1.3 | 6.2 | 12.1 | 7.7 | 27.1 | 100.06 | 2 |
| Example 14 | 1.7 | 1.6 | 6.4 | 7.1 | 7.7 | 10.2 | 12.69 | 4 |
| Example 15 | 1.7 | 0.6 | 6.9 | 2.4 | 9.1 | 0.8 | 62.73 | 3 |

**Table 18: Alkyd**

| | Gloss | | | | | | ΔE | Peelability |
|---|---|---|---|---|---|---|---|---|
| Tinted Coating | 20° | | 60° | | 85° | | | |
| | Pre | Post | Pre | Post | Pre | Post | | |
| Example 4 | 54.8 | 32.7 | 86.2 | 31.9 | 93.4 | 85.2 | 11.59 | 9 |
| Example 5 | 53 | 42.1 | 86.7 | 68.9 | 93 | 91.9 | 2.57 | 10 |
| Example 6 | 54.2 | 42.2 | 86.7 | 70.0 | 92.6 | 90.5 | 1.59 | 10 |
| Example 7 | 57.9 | 36.7 | 85.8 | 61.7 | 92.6 | 90.9 | 5.38 | 10 |
| Example 8 | 48.8 | 41.8 | 84 | 68.1 | 94 | 91.8 | 3.42 | 10 |
| Example 9 | 56 | 44.7 | 86.5 | 75.5 | 94.1 | 94 | 0.87 | 10 |
| Example 10 | 55.1 | 45.3 | 86.3 | 80.1 | 92.6 | 94 | 0.62 | 10 |
| Example 11 | 60 | 46.7 | 87.1 | 78.5 | 95.6 | 91.9 | 0.42 | 8 |
| Example 12 | 60.9 | 43.5 | 86.4 | 82.3 | 93.5 | 95.9 | 0.56 | 7 |
| Example 13 | 51.3 | 39.2 | 86.2 | 78.1 | 94.3 | 93.7 | 0.53 | 8 |
| Example 14 | 56.7 | 40.4 | 86.3 | 82.7 | 93.9 | 94.3 | 0.53 | 9 |
| Example 15 | 57.5 | 54.7 | 86.1 | 84.8 | 94.6 | 95.6 | 0.59 | 9 |

**Table 19: Aluminum**

| | Gloss | | | | | | ΔE | Peelability |
|---|---|---|---|---|---|---|---|---|
| Tinted Coating | 20° | | 60° | | 85° | | | |
| | Pre | Post | Pre | Post | Pre | Post | | |
| Example 4 | 36.6 | 33 | 71.8 | 58.9 | 70.6 | 67.6 | 6.7 | 9 |
| Example 5 | 35.3 | 34.8 | 66.8 | 62.3 | 70.1 | 69.4 | 4.67 | 9 |
| Example 6 | 37 | 33.4 | 72.7 | 57.3 | 70.1 | 64.7 | 7.16 | 10 |
| Example 7 | 35 | 33 | 65.1 | 56.6 | 68.3 | 66.2 | 4.77 | 10 |
| Example 8 | 35.9 | 33.3 | 70.5 | 60.6 | 71.1 | 67.9 | 5.17 | 10 |
| Example 9 | 34.7 | 33.4 | 66.3 | 60.1 | 68.6 | 67.3 | 4.8 | 10 |
| Example 10 | 37.1 | 33 | 72.4 | 58.6 | 69.1 | 66.7 | 5.33 | 10 |
| Example 11 | 36.5 | 1.1 | 71.4 | 10.8 | 71.1 | 29.3 | 105.68 | 1 |
| Example 12 | 35.5 | 0.9 | 68.3 | 9.1 | 70.1 | 24.4 | 109.24 | 1 |
| Example 13 | 37 | 31.9 | 72.2 | 54.4 | 69.8 | 65.2 | 6.07 | 6 |
| Example 14 | 35.9 | 33 | 69.3 | 59.0 | 67.9 | 66.8 | 5.22 | 7 |
| Example 15 | 34.2 | 32.7 | 64.1 | 58.3 | 68.7 | 68.5 | 2.08 | 10 |

The impact of film thickness on peelability was tested using primed drywall. Results are show in Table 20.

**Table 20**

| Primed Drywall | | | | |
|---|---|---|---|---|
| | 3 mil | 6 mil | 10 mil | 15 mil |
| Example 4 | 8 | 6 | 9 | 8 |
| Example 5 | 8 | 10 | 10 | 10 |
| Example 6 | 9 | 9 | 10 | 10 |
| Example 7 | 9 | 9 | 9 | 10 |
| Example 8 | 8 | 9 | 9 | 10 |
| Example 9 | 9 | 9 | 10 | 10 |
| Example 10 | 8 | 10 | 10 | 10 |
| Example 11 | 1 | 1 | 1 | 2 |
| Example 12 | 1 | 1 | 1 | 1 |
| Example 13 | 6 | 7 | 9 | 9 |
| Example 14 | 5 | 7 | 8 | 8 |
| Example 15 | 5 | 7 | 8 | 9 |

The amount of PVB resin by weight percent (wt. %) in each example and P:B ratio is summarized in Table 21.

**Table 21**

| Example | Wt. % PVB | P:B Ratio |
|---|---|---|
| 4 | 53.8% | 1.25 |
| 5 | 65.6% | 0.83 |
| 6 | 65% | 0.68 |
| 7 | 60.8% | 1.1 |
| 8 | 65.6% | 0.83 |
| 9 | 74.1% | 0.39 |
| 10 | 62.9% | 0.56 |
| 11 | 55.6% | not determined |
| 12 | 65.1% | not determined |
| 13 | 72.2% | not determined |
| 14 | 78.8% | not determined |
| 15 | 82.5% | not determined |

All examples showed peelability over a broad range of substrate types at varying film thicknesses. The formulations of Examples 11 and 12 readily peeled only from alkyd substrate, the least porous substrate tested. It is believed that the particular contents (e.g. plasticizer, filer, etc.) of the commercial PVB resin (of unknown specifications) used in Examples 11 and 12 impacted peelability on the remaining substrates, likely due to inability to form a continuous film due to unknown and unspecified additives. Thus, those results are not meant to be limiting of the present invention. For primed drywall or primed and painted drywall, the gloss change was minimal for Examples 4-10, while the remaining formulations showed varying degrees of gloss change and color change to the substrates.

Whereas particular embodiments of this invention have been described above for purposes of illustration, it will be evident to those skilled in the art that numerous variations of the details of the present invention may be made without departing from the invention as defined in the appended claims.

## Claims

1. A method of selecting a colored coating composition comprising:
visualizing the appearance of a color on a substrate comprising:
applying a coating composition having that color to the substrate, and
drying and/or curing the coating composition to produce a coating,
wherein the coating is peelable from the substrate,
wherein the coating composition is a test coating composition
comprising a test base resin; and
producing a final coating composition that color matches the test coating composition.

2. The method of claim 1, wherein the coating composition comprises a colorant.

3. The method of claim 1, wherein the coating composition comprises an acrylic resin.

4. The method of claim 1, wherein the coating composition is substantially free of polyurethane polymers, based on the total solids weight of the coating composition.

5. The method of claim 1, wherein the coating composition is aqueous.

6. The method of claim 1, wherein the coating is peelable from the substrate without use of external releasing components.

7. The method of claim 1, wherein the substrate is porous, preferably wherein the porous substrate comprises dry wall, concrete, wood, porcelain, and/or ceram ic.

8. The method of claim 1, wherein the substrate is at least partially coated with a paint prior to application of the coating composition and the coating is removable from the painted substrate without damage to the paint.

9. The method of claim 1, wherein the desired color is the color of a physical sample swatch and/or of an online color sample.

10. The method of claim 1, further comprising:
applying a second coating composition and drying and/or curing the second coating composition to produce a second coating.

11. The method of claim 10, further comprising comparing the first and second coatings.

12. The method of claim 1, wherein the test coating composition is dried and/or cured to form a test coating that color matches a desired color that is the color of a physical sample swatch and/or of an online color sample.

13. The method of claim 1, wherein the peelable coating composition comprises an aqueous dispersion of a resinous binder comprising polyvinyl butyral, wherein the polyvinyl butyral is present in an amount of over 50 wt.%, based on total solids.

14. The method of claim 13, wherein the peelable coating composition further comprises a pigment, wherein the weight ratio of pigment to binder (P:B ratio) is at least 0.25, and/or a plasticizer.

## Patentansprüche

1. Ein Verfahren zum Auswählen einer farbigen Beschichtungszusammensetzung umfassend:
Visualisieren des Erscheinungsbilds einer Farbe auf einem Substrat umfassend:
Aufbringen einer Beschichtungszusammensetzung, welche die Farbe aufweist, auf das Substrat und
Trocknen und/oder Härten der Beschichtungszusammensetzung, um eine Beschichtung zu bilden,
wobei die Beschichtung von dem Substrat abziehbar ist,
wobei die Beschichtungszusammensetzung eine Testzusammensetzung umfassend ein Testgrundharz ist; und
Herstellen einer endgültigen Beschichtungszusammensetzung, welche mit der Farbe der Testbeschichtungszusammensetzung übereinstimmt.

2. Das Verfahren gemäß Anspruch 1, wobei die Beschichtungszusammensetzung ein Farbmittel umfasst.

3. Das Verfahren gemäß Anspruch 1, wobei die Beschichtungszusammensetzung ein Acrylharz umfasst.

4. Das Verfahren gemäß Anspruch 1, wobei die Beschichtungszusammensetzung im Wesentlichen frei von Polyurethanpolymeren ist, bezogen auf den Gesamtfeststoffgehalt der Beschichtungszusammensetzung.

5. Das Verfahren gemäß Anspruch 1, wobei die Beschichtungszusammensetzung wässrig ist.

6. Das Verfahren gemäß Anspruch 1, wobei die Beschichtung von dem Substrat ohne die Verwendung externer Ablösekomponenten abziehbar ist.

7. Das Verfahren gemäß Anspruch 1, wobei das Substrat porös ist, wobei das poröse Substrat vorzugsweise eine Trockenwand, Beton, Holz, Porzellan und/oder Keramik umfasst.

8. Das Verfahren gemäß Anspruch 1, wobei das Substrat zumindest teilweise vor dem Aufbringen der Beschichtungszusammensetzung mit einem Lack beschichtet ist und die Beschichtung von dem lackierten Substrat ohne Schaden am Lack entfernbar ist.

9. Das Verfahren gemäß Anspruch 1, wobei die gewünschte Farbe die Farbe eines physikalischen Farbmusters und/oder eines Online-Farbmusters ist.

10. Das Verfahren gemäß Anspruch 1, des Weiteren umfassend:
Aufbringen einer zweiten Beschichtungszusammensetzung und Trocknen und/oder Härten der zweiten Beschichtungszusammensetzung, um eine zweite Beschichtung herzustellen.

11. Das Verfahren gemäß Anspruch 10, des Weiteren umfassend ein Vergleichen der ersten und zweiten Beschichtungen.

12. Das Verfahren gemäß Anspruch 1, wobei die Testbeschichtungszusammensetzung getrocknet und/oder gehärtet wird, um eine Testbeschichtung zu bilden, die einer gewünschten Farbe entspricht, die die Farbe eines physikalischen Farbmusters und/oder eines Online-Farbmusters darstellt.

13. Das Verfahren gemäß Anspruch 1, wobei die abziehbare Beschichtungszusammensetzung eine wässrige Dispersion eines harzartigen Bindemittels umfassend Polyvinylbutyral umfasst, wobei das Polyvinylbutyral in einer Menge von mehr als 50 Gew.-%, bezogen auf den Gesamtfeststoffgehalt, vorhanden ist.

14. Das Verfahren gemäß Anspruch 13, wobei die abziehbare Beschichtungszusammensetzung des Weiteren ein Pigment, wobei das Gewichtsverhältnis von Pigment zu Bindemittel (P:B-Verhältnis) mindestens 0,25 beträgt, und/oder einen Weichmacher umfasst.

## Revendications

1. Procédé de sélection d'une composition de revêtement colorée, comprenant :
- le fait de visualiser l'apparence d'une couleur sur un substrat, comportant :
le fait d'appliquer sur le substrat une composition présentant cette couleur,
et le fait de faire sécher et/ou durcir la composition de revêtement, pour en faire un revêtement,
étant entendu que ce revêtement peut être enlevé du substrat par pelage,
et que la composition de revêtement est une composition de revêtement d'essai, comprenant une résine de base d'essai,
- et le fait de produire une composition de revêtement finale qui concorde, pour la couleur, avec la composition de revêtement d'essai.

2. Procédé conforme à la revendication 1, dans lequel la composition de revêtement comprend un colorant.

3. Procédé conforme à la revendication 1, dans lequel la composition de revêtement comprend une résine polyacrylique.

4. Procédé conforme à la revendication 1, dans lequel la composition de revêtement ne contient pratiquement pas de polymères de type polyuréthane, par rapport au poids total des solides de la composition de revêtement.

5. Procédé conforme à la revendication 1, dans lequel la composition de revêtement est aqueuse.

6. Procédé conforme à la revendication 1, dans lequel on peut enlever le revêtement du substrat par pelage sans avoir recours à des composants externes de décollement.

7. Procédé conforme à la revendication 1, dans lequel le substrat est poreux, et dans lequel, de préférence, le substrat comprend une paroi sèche, un béton, du bois, de la porcelaine et/ou une céramique.

8. Procédé conforme à la revendication 1, dans lequel le substrat est revêtu, au moins en partie, avec une peinture avant l'application de la composition de revêtement, et le revêtement peut être enlevé du substrat peint sans dommage pour la peinture.

9. Procédé conforme à la revendication 1, dans lequel la couleur voulue est la couleur d'un échantillon physique et/ou d'un échantillon de couleur en ligne.

10. Procédé conforme à la revendication 1, qui comprend en outre
le fait d'appliquer une deuxième composition de revêtement,
et le fait de faire sécher et/ou durcir cette deuxième composition de revêtement, pour en faire un deuxième revêtement.

11. Procédé conforme à la revendication 10, qui comporte en outre le fait de comparer les premier et deuxième revêtement.

12. Procédé conforme à la revendication 1, dans lequel on fait sécher et/ou durcir la composition de revêtement d'essai pour en faire un revêtement d'essai dont la couleur concorde avec une couleur voulue qui est la couleur d'un échantillon physique et/ou d'un échantillon de couleur en ligne

13. Procédé conforme à la revendication 1, dans lequel la composition de revêtement pelable comprend une dispersion aqueuse d'un liant résineux comprenant du poly(butyral de vinyle), lequel poly(butyral de vinyle) se trouve présent en une quantité représentant plus de 50 % du poids total de solides.

14. Procédé conforme à la revendication 13, dans lequel la composition de revêtement pelable comprend en outre un pigment, étant entendu que le rapport pondéral du pigment au liant (rapport P/L) vaut au moins 0,25, et/ou un plastifiant.
